# EUROPEAN PATENT APPLICATION

(11) **EP 4 838 767 A1**
(43) Date of publication of application: **11.11.2026**
(21) Application number: 25174443.9
(22) Date of filing: 06.05.2025
(51) Int. Cl.: H02K 33/16, H02K 33/02, H02K 33/12, F04B 35/04, H02K 1/34

(54) **LINEAR ACTUATOR, COMPRESSOR, PUMP, AND HOUSEHOLD APPLIANCE**

(71) Applicant: BSH Hausgeräte GmbH, 81739 München (DE)
(72) Inventor: Stavrovsky, Vladimir, 06601 Humenne (SK); Blaz, Robert, 06601 Humenne (SK); Stovcik, Slavomir, 06601 Humenne (SK)

(57) **Abstract**

Disclosed is a linear actuator comprising a linear actuator having more than one single electrical coils which can be operated individually in order to enlarge an axial stroke of a mover compared to one single coil, a compressor, a pump and a household appliance comprising such pump and/or such compressor.

## Description

The present invention concerns a linear actuator, a compressor comprising such linear actuator, a pump comprising such linear actuator, and a household appliance including such compressor and/or pump.

Linear actuators are machine components which produce a usually reciprocating linear motion from energy, in particular from electrical input supplied thereto. In particular, they may be included in compressors and/or pumps as those integrated in household appliances, for example.

From US 2020/0260628 A1, a linear compressor is known which comprises a piston configured to linearly reciprocate in a cylinder so as to compress a refrigerant. For driving the motion, the compressor comprises an inner and an outer stator arranged with an interspace in-between, and a permanent magnet connected to the piston and positioned in the interspace. Mutual electromagnetic force between the permanent magnet, the inner stator, and the outer stator together with energy of resonance element causes a linear motion of the permanent magnet and, therewith, of the piston connected thereto.

US 2020/0395836 A1 discloses a compressor having a linear motor comprising an outer stator, an inner stator, and a mover which is located between the outer and the inner stator and coupled to a piston. The outer stator includes a plurality of laminated blocks, on which a coil is wound. Two permanent magnets are coupled to the inner stator.

It is an object of the present invention to provide an improved linear actuator, an improved compressor, an improved pump, and an improved household appliance.

The object is achieved by a linear actuator according to claim 1, by a compressor according to claim 8, by a pump according to claim 9, and by a household appliance according to claim 10. Advantageous embodiments are disclosed in the dependent claims, the description, and the drawings.

A linear actuator according to the present invention comprises a stator with a first coil, a a mover with at least one magnet ring, and at least one mechanical tension element. The stator, the mover and the at least one tension element are adapted to generate, in consequence of an electric power input, a linearly reciprocating movement of the mover () relative to the stator (). In addition, the stator has a second coil which is adapted to be controlled separately from the first coil.
Due to the second coil, a mover stroke can produce a higher mass flow rate of a compressor or pump. As the coils are controlled separately, they can be collaborated to generate one current amplitude and period depending on a requested stroke, for instance.

In one embodiment, the second coil is positioned in an axial distance to the first coil. By means of this, the second coil can be of the same design as the first coil.

With regard to this embodiment, it is advantageous if the mover is adapted to be moved inside the coils. By means of this, the first coil and the second coils are outer coils, enabling an easy construction and assembly of the linear actuator.

In another embodiment the second coil and the first coil are at least partially in axial overlap. By means of this, a compact design can be realised.

With regard to this embodiment, it is advantageous if the first coil is an outer coil surrounding the mover and the second coil is an inner coil which is positioned at least partially inside the mover.

With reference to both embodiments, it is preferred if the mover is a piston which interacts with a stationary cylinder. By means of this, the mover is guided at its outer circumferential surfaces which are easier to finish than inner circumferential surfaces.

Preferably, the at least one mechanical resonance element is positioned inside the mover and being connected directly or via holders to the mover. By means of this, the design of the linear actuator can be even more compact. The at least one resonance element is used to accumulate resonance energy as additional force of linear actuator and thus responsible for the proper and stable axial translational movement of the mover. In particular, it can be mechanical spring. However, the at least one resonance element can also be positioned outside the mover and be connected directly or via holders to the mover.

A compressor according to the present invention comprises a linear actuator according to an embodiment of the present invention. Therein, the linear actuator is preferably configured to vary a volume of a compression chamber formed by the compressor.

A pump according to the present invention comprises a linear actuator according to an embodiment of the present invention.

A household appliance according to the present invention comprises a compressor and/or a pump respectively in accordance with an embodiment of the present invention. The household appliance in particular may be a major appliance such as a washing machine, a tumble drier, a dishwater, a refrigerator, or a freezer.

In what follows, a preferred embodiment of the present invention is explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in
- Figure 1:: a first exemplary embodiment of a compressor according to the present invention in a first sectional view; and
- Figure 2:: a second exemplary embodiment of a compressor according to the present invention in a first sectional view.

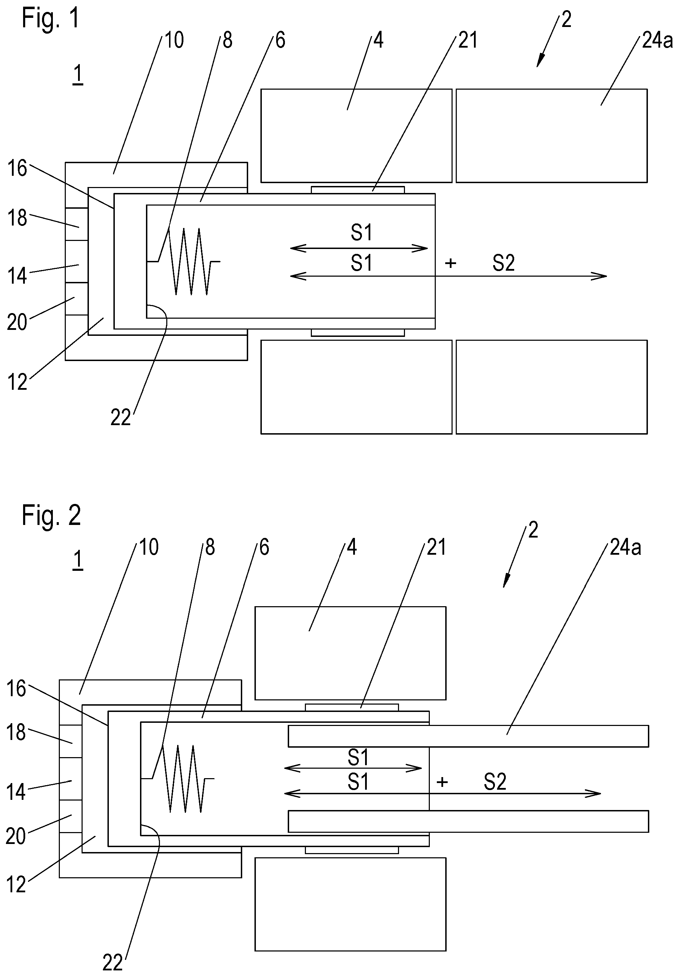

In Figure 1, a compressor 1 according to an embodiment of the present invention is partially shown. The compressor 1 comprises a linear actuator 2 according to a first exemplary embodiment of the present invention.

The line actuator 2 comprises a stator having a first coil 4, a mover 6 and at least one mechanical resonance element 8.

The stator, the mover 6 and the mechanical resonance element 8 are adapted to generate, in consequence of an electric power input, a linearly reciprocating movement of the mover 8 relative to the stator, in particular to the first coil 4.

The coil 4 is an electrical outer electric coil which surrounds the mover 6.

The mover 6 is guided axially inside a stationary cylinder 10. By moving the mover 6 relatively to the cylinder 10, a chamber 12 between a bottom 14 of the cylinder 10 and a front face 16 of the mover 6 is maximized or minimized. When maximizing the chamber 12, a fluid, for instance a coolant, is sucked into the chamber 12 through an inlet 18 in the bottom 14 of the cylinder 10. When minimizing the chamber 12, the fluid is pressurized and released out of the chamber 12 via an outlet 20 in the bottom 14 of the cylinder 10.

In order to interact with the first coil 4, the mover 6 a magnetic ring 21 is positioned on the outer circumference of the mover 6. Preferably, the magnetic ring is a permanent magnet. A yoke carrying the magnetic ring 21 for distributing a magnetic flux at least of the coil 4 is not illustrated.

The at least one resonance element 8 is positioned inside the mover 6 and clamped between a rear face 22 of the mover 6 and a not shown housing. The at least one resonance element 8 supports a proper and stable axial translational movement of the mover 6. Here, the exemplary resonance element is a mechanical spring having a helical shape.

In order to enlarge a linear stroke of the mover 6, a second electrical coil 24a is provided. The second coil 24a is also an outer coil. It is positioned beside the first coil 4 opposite to the cylinder 10. The second coil 24a surrounds the mover 6 and can be actuated (operated) separately to the first coil 4. For instance, the first coil 4 is activated for a first stroke S1 and then, the second coil 24a is activated for a second stroke S2 such that the mover 6 is moved over a greater axial distance. By means of this, a higher mass flow rate of the compressor (or pump) is realized.

In Figure 2, a second embodiment of a linear actuator according to the invention is shown. Contrary to the first embodiment, a second electrical coil 24b is designed as an inner coil 24b. The second coil 24b can be controlled individually and is positioned at least partially inside the mover 6, whereas it is partially in axial overlap with the first coil 4. The second coil 24b is also provided to enlarge a linear stroke of the mover 6. For instance, the first coil 4 is activated for a first stroke S1 and then, the second coil 24 is activated for a second stroke S2 such that the mover 6 is moved over a greater axial distance. By means of this, a higher mass flow rate of the compressor (or pump) is realized. It should be noted that the second coil 24b can also have a shorter axial extension such that there is no axial overlap between the coils 4, 24b.

Disclosed is a linear actuator comprising a linear actuator having more than one single electrical coils which can be operated individually in order to enlarge an axial stroke of a mover compared to one single coil, a compressor, a pump and a
household appliance comprising such pump and/or such compressor.

### Reference signs

- 1: compressor
- 2: linear actuator
- 4: first coil
- 6: mover
- 8: resonance element
- 10: cylinder
- 12: chamber
- 14: bottom of the cylinder
- 16: front face of the mover
- 18: inlet
- 20: outlet
- 21: magnetic ring
- 22: rear face
- 24a: second coil (outer coil)
- 24b: second coil (inner coil)

- S1: first stroke
- S2: second stroke

## Claims

1. A linear actuator (1) comprising
- a stator comprising a first coil (4);
- a mover (6) having at least one magnet ring (21), and
- at least one mechanical resonance element (8),
which are adapted to generate, in consequence of an electric power input a linearly reciprocating movement of the mover (6) relative to the stator;
wherein a second coil (24a, 24b) is provided which is adapted to be controlled separately from the first coil (4).

2. The linear actuator according to claim 1, wherein the second coil (24a) is in an axial distance to the first coil (4).

3. The linear actuator according to claim 2, wherein the mover (6) is adapted to be moved inside the coils (24a).

4. The linear actuator according to claim 3, wherein the second coil (24b) and the first coil (4) are at least partially in axial overlap.

5. The linear actuator according to claim 4, wherein the first coil (4) is an outer coil surrounding the mover (6) and the second coil (24b) is an inner coil which is positioned at least partially inside the mover (6).

6. The linear actuator according to any of the preceding claims, wherein the mover (6) is a piston which interacts with a stationary cylinder (10).

7. The linear actuator according to any of the preceding claims, wherein the at least one mechanical resonance element (8) is positioned inside the mover (6).

8. Compressor (1) comprising a linear actuator (2) according to one of the preceding claims.

9. Pump comprising a linear actuator (2) according to one of the preceding claims 1 to 7.

10. Household appliance comprising a compressor (1) according to claim 8 and/or a pump according to claim 89.

11. Household appliance according to claim 10 which is a washing machine, a tumble drier, a dishwater, a refrigerator, or a freezer.
